# EUROPEAN PATENT APPLICATION

(11) **EP 4 801 144 A1**
(43) Date of publication of application: **02.09.2026**
(21) Application number: 23956417.2
(22) Date of filing: 25.10.2023
(51) Int. Cl.: H04W 72/044

(54) **RESOURCE ALLOCATION METHOD, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2023/126543
(87) International publication number: WO 2025/086165

(57) **Abstract**

Embodiments of the present disclosure relate to the technical field of communications, and provide a resource allocation method, a device, and a storage medium. The method comprises: an AP determines a first trigger frame, the first trigger frame comprising at least one user information field, and each user information field being used for allocating an uplink dRU to an STA; and the AP sends the first trigger frame. The embodiments of the present disclosure may provide an uplink dRU allocation method.

## Description

### TECHNICAL FIELD

The present disclosure relates to the field of communication technology, and specifically to a method for resource allocation, a device, and a storage medium.

### BACKGROUND

In order to achieve higher throughput, lower network latency and higher reliability, the ultra high reliability (UHR) technology is provided, which may improve reliability of a wireless local area network (WLAN) connection, reduce latency, improve manageability, increase throughput, and reduce device-level power consumption under different signal-to-noise ratio (SNR) levels.

In the UHR, a method for increasing a transmission distance via a distributed resource unit (dRU) is provided, and the allocation scheme for uplink (UL) dRUs will be further investigated.

### SUMMARY

Embodiments of the present disclosure provide a method for resource allocation, a device, and a storage medium, which may provide a method for allocating an uplink (UL) distributed resource unit (dRU).

According to a first aspect, the embodiments of the present disclosure provide a method for resource allocation, including: determining, by an access point (AP), a first trigger frame (TF), in which the first TF includes at least one user information field, and each of the at least one user information field is used to allocate a UL dRU to a station (STA); and sending, by the AP, the first TF.

According to a second aspect, the embodiments of the present disclosure provide a method for resource allocation, including: receiving, by a first STA, a first TF, in which the first TF includes at least one user information field, and each of the at least one user information field is used to allocate a UL dRU to an STA.

According to a third aspect, the embodiments of the present disclosure provide an AP, including: a processing module, configured to determine a first TF, in which the first TF includes at least one user information field, each of the at least one user information field is used to allocate a UL dRU to an STA; and a transceiver module, configured to send the first TF.

According to a fourth aspect, the embodiments of the present disclosure provide an STA, including: a transceiver module, configured to receive a first TF, in which the first TF includes at least one user information field, each of the at least one user information field is used to allocate a UL dRU to the STA.

According to a fifth aspect, the embodiments of the present disclosure provide an AP, including one or more processors, in which the AP is configured to perform the method for resource allocation provided in the first aspect of the embodiments of the present disclosure.

According to a sixth aspect, the embodiments of the present disclosure provide an STA, including one or more processors, in which the STA is configured to perform the method for resource allocation provided in the second aspect of the embodiments of the present disclosure.

According to a seventh aspect, the embodiments of the present disclosure provide a storage medium for storing instructions that, when executed on a communication device, cause the communication device to perform the method for resource allocation provided in the first aspect of the embodiments of the present disclosure.

According to an eighth aspect, the embodiments of the present disclosure provide a communication system, including an AP and at least one STA, in which the AP is configured to perform the method as described in the first aspect, and each of the at least one STA is configured to perform the method as described in the second aspect.

Based on the method for resource allocation, the device and the storage medium provided in the embodiments of the present disclosure, a method of allocating a dRU based on a TF may be provided.

Additional aspects and advantages of the embodiments of present disclosure will be given in part in the following descriptions, become apparent in part from the following descriptions, or be learned from the practice of the embodiments of the present disclosure.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings may be obtained according to these drawings without creative labor.
FIG. 1 is a schematic diagram of an architecture of a communication system according to the embodiments of the present disclosure.
FIG. 2 is a schematic diagram of an interaction of a method for resource allocation according to the embodiments of the present disclosure.
FIG. 3 is a first flowchart of a method for resource allocation according to the embodiments of the present disclosure.
FIG. 4 is a second flowchart of a method for resource allocation according to the embodiments of the present disclosure.
FIG. 5 is a block diagram of structure of an access point (AP) according to the embodiments of the present disclosure.
FIG. 6 is a block diagram of structure of a station (STA) according to the embodiments of the present disclosure.
FIG. 7 is a block diagram of structure of a communication device according to the embodiments of the present disclosure.
FIG. 8 is a block diagram of structure of a chip according to the embodiments of the present disclosure.

### DETAILED DESCRIPTION

The embodiments of the present disclosure provide a method for resource allocation, a device, and a storage medium.

According to a first aspect, the embodiments of the present disclosure provide a method for resource allocation, performed by an AP, including: determining, by an access point (AP), a first trigger frame (TF), in which the first TF includes at least one user information field, and each of the at least one user information field is used to allocate an uplink (UL) distributed resource unit (dRU) to a station (STA); and sending, by the AP, the first TF.

In the above embodiments, the AP may realize allocation of the UL dRU via the at least one user information field in the first TF, thus helping to improve a transmission distance between the AP and the STA, increasing system throughput and making it suitable for UHR requirements.

In some embodiments in combination with the first aspect, in some embodiments, each of the at least one user information field includes a dRU allocation subfield, the dRU allocation subfield is used to allocate a UL dRU to a corresponding STA, in which a UL dRU allocated to each STA corresponds to a different dRU index value.

In the above embodiments, the AP may allocate the UL dRU with the different dRU index value to a different STA via the dRU allocation subfield, which helps to distinguish different UL dRUs allocated to different STAs and improve allocation efficiency of the UL dRU.

In some embodiments in combination with the first aspect, in some embodiments, a format of the UL dRU allocated to each STA includes at least one of: 26-tone-dRU; 52-tone-dRU; 106-tone-dRU; 242-tone-dRU; 484-tone-dRU; 26-tone-dRU +52-tone-dRU; 26-tone-dRU +106-tone-dRU; or 52-tone-dRU +106-tone-dRU.

In the above embodiments, the AP may allocate the UL dRU to STAs using a variety of UL dRU formats, which helps to improve flexibility of UL dRU allocation. At the same time, the STA performs UL data transmission using a dRU, which helps to improve power spectral density (PSD), increase a system transmission distance, and improve resource utilization.

In some embodiments in combination with the first aspect, in some embodiments, the UL dRU allocated to each STA is related to an operating bandwidth (BW) of the corresponding STA, the operating BW includes 20 MHz, 40 MHz, 80 MHz, 160 MHz, or 320 MHz.

In the above embodiments, the AP may allocate the UL dRU to the corresponding STA according to the operating BW of the STA, thus further adapting to different communication requirements, improving rationality of UL dRU allocation, and improving system transmission efficiency.

In some embodiments in combination with the first aspect, in some embodiments, each of the at least one user information field further includes a UL modulation and coding scheme (MCS) subfield, in which the UL MCS subfield indicates an MCS to be used by a corresponding STA when sending a UL physical layer (PHY) protocol data unit (PPDU).

In the above embodiments, the AP may also indicate the MCS adopted by the corresponding STA when sending the UL PPDU via the UL MCS subfield, which helps to improve communication efficiency and system throughput.

In some embodiments in combination with the first aspect, in some embodiments, each of the at least one user information field further includes a spatial stream (SS) allocation subfield, in which the SS allocation subfield indicates SS information for a corresponding STA when sending a UL PPDU, in which the SS information includes a starting SS and a number of SSs.

In the above embodiments, the AP may also indicate the SS information when the corresponding STA sends the UL PPDU via the SS allocation subfield, which helps to improve communication efficiency and system throughput.

In some embodiments in combination with the first aspect, in some embodiments, each of the at least one user information field further includes a UL target receive power subfield, in which the UL target receive power subfield indicates a transmit power value of a UL PPDU sent by a corresponding STA.

In the above embodiments, the AP may also indicate the transmit power value of the UL PPDU sent by the corresponding STA via the UL target receive power subfield, which helps to improve communication efficiency and system throughput.

In some embodiments in combination with the first aspect, in some embodiments, each of the at least one user information field further includes an association identifier (AID) subfield, in which the AID subfield indicates an AID allocated by the AP to a corresponding STA.

In the above embodiments, the AP may distinguish user information fields corresponding to STAs via an AID subfield, so that the STA may quickly determine a UL dRU allocated by the AP to it, which is beneficial to improve efficiency of dRU allocation.

In some embodiments in combination with the first aspect, in some embodiments, the first TF includes a common information field, and the common information field includes at least one of: a trigger type subfield, in which the trigger type subfield indicates, via a first value, that the first TF is used to allocate the UL dRU.

In the above embodiments, the AP may indicate via the trigger type subfield that the first TF is used to allocate the UL dRU, which is beneficial for the STA to quickly determine usage of the first TF, thus improving allocation efficiency of the UL dRU.

In some embodiments in combination with the first aspect, in some embodiments, the common information field includes a UL BW subfield, in which the UL BW subfield indicates a maximum channel BW corresponding to a UL dRU allocated to each STA.

In some embodiments in combination with the first aspect, in some embodiments, the common information field includes a more TFs subfield, in which the more TFs subfield indicates, via a second value, that at least one second TF is sent after sending the first TF, and each of the at least one second TF is used to allocate a UL dRU to at least one STA.

In the above embodiments, when the AP may not complete UL dRU allocation via the first TF, it may indicate to the STA via the more TFs subfield that the AP will also allocate the UL dRU via the at least one second TF after sending the first TF, which may ensure that the STA obtains the UL dRU allocated by the AP, and helps to improve allocation efficiency of the UL dRU.

In some embodiments in combination with the first aspect, in some embodiments, the common information field includes a UL spatial reuse subfield, in which the UL spatial reuse subfield indicates that at least one STA is allowed to simultaneously perform UL data transmission.

In the above embodiments, the AP indicates that each STA is allowed to perform the UL data transmission simultaneously via a spatial reuse subfield, which is beneficial to improve efficiency of the UL data transmission and system throughput.

In some embodiments in combination with the first aspect, in some embodiments, the common information field includes a UL length subfield, in which the UL length subfield indicates a length of a UL trigger-based (TB) PPDU.

In the above embodiments, the AP may indicate the length of the UL TB PPDU via the UL length subfield, so that the STA sends a UL TB PPDU that meets a length requirement, thus improving efficiency of the UL data transmission.

In some embodiments in combination with the first aspect, in some embodiments, the common information field includes a number of long training fields (LTFs) subfield, in which the number of LTFs subfield indicates a number of LTFs of a UL TB PPDU.

In the above embodiments, the AP indicates the number of the LTFs of the UL TB PPDU via the number of LTFs subfield, which helps to improve efficiency of the STA sending the UL TB PPDU.

According to a second aspect, the embodiments of the present disclosure provide a method for resource allocation, performed by a first STA, including: receiving, by a first STA, a first TF, in which the first TF includes at least one user information field, and each of the at least one user information field is used to allocate a UL dRU to an STA.

In the above embodiments, the AP may realize allocation of the UL dRU via the user information field in the first TF, and the first STA may directly determine the UL dRU allocated by the AP from a corresponding user information field, thus helping to improve a transmission distance between the AP and the STA, increasing system throughput and making it suitable for UHR requirements.

In some embodiments in combination with the second aspect, in some embodiments, each of the at least one user information field includes a dRU allocation subfield, the dRU allocation subfield is used to allocate a UL dRU to a corresponding STA, in which a UL dRU allocated to each STA corresponds to a different dRU index value.

In the above embodiments, the AP may allocate the UL dRU with the different dRU index value to a different STA via the dRU allocation subfield, which helps to distinguish different UL dRUs allocated to different STAs and improve allocation efficiency of the UL dRU.

In some embodiments in combination with the second aspect, in some embodiments, a format of the UL dRU allocated to each STA includes at least one of: 26-tone-dRU; 52-tone-dRU; 106-tone-dRU; 242-tone-dRU; 484-tone-dRU; 26-tone-dRU +52-tone-dRU; 26-tone-dRU +106-tone-dRU; or 52-tone-dRU +106-tone-dRU.

In the above embodiments, the AP may allocate a variety of UL dRU formats to each STA, and at the same time, the STA performs UL data transmission using a dRU, which helps to improve PSD, increase a system transmission distance, and improve resource utilization.

In some embodiments in combination with the second aspect, in some embodiments, the UL dRU allocated to each STA is related to an operating BW of the corresponding STA, the operating BW includes 20 MHz, 40 MHz, 80 MHz, 160 MHz, or 320 MHz.

In the above embodiments, the AP may allocate the UL dRU to the corresponding STA according to the operating BW of the STA, thus further adapting to different communication requirements, improving rationality of UL dRU allocation, and improving system transmission efficiency.

In some embodiments in combination with the second aspect, in some embodiments, each of the at least one user information field further includes a UL MCS subfield, in which the UL MCS subfield indicates an MCS to be used by a corresponding STA when sending a UL PHY PPDU.

In the above embodiments, the first STA may send a UL PPDU according to the MCS indicated by the UL MCS subfield, which helps to improve communication efficiency and system throughput.

In some embodiments in combination with the second aspect, in some embodiments, each of the at least one user information field further includes an SS allocation subfield, in which the SS allocation subfield indicates SS information for a corresponding STA when sending a UL PPDU, in which the SS information includes a starting SS and a number of SSs.

In the above embodiments, the first STA may send the UL PPDU according to the SS information indicated by the SS allocation subfield, which helps to improve communication efficiency and system throughput.

In some embodiments in combination with the second aspect, in some embodiments, each of the at least one user information field further includes a UL target receive power subfield, in which the UL target receive power subfield indicates a transmit power value of a UL PPDU sent by a corresponding STA.

In the above embodiments, the first STA may send the UL PPDU according to the transmit power value of the UL PPDU indicated by the UL target receive power subfield, which helps to improve communication efficiency and system throughput.

In some embodiments in combination with the second aspect, in some embodiments, each of the at least one user information field further includes an AID subfield, in which the AID subfield indicates an AID allocated by the AP to a corresponding STA.

In the above embodiments, the first STA may determine the at least one user information field used to allocate the UL dRU to the first STA via an AID subfield, so that the STA quickly determines the UL dRU allocated by the AP to it, which is beneficial to improve efficiency of dRU allocation.

In some embodiments in combination with the second aspect, in some embodiments, the first TF includes a common information field, and the common information field includes a trigger type subfield, in which the trigger type subfield indicates, via a first value, that the first TF is used to allocate the UL dRU.

In the above embodiments, the first STA may determine via the trigger type subfield that the first TF is used to allocate the UL dRU, which is beneficial for the STA to quickly determine usage of the first TF, thus improving allocation efficiency of the UL dRU.

In some embodiments in combination with the second aspect, in some embodiments, the common information field includes a UL BW subfield, in which the UL BW subfield indicates a maximum channel BW corresponding to a UL dRU allocated to each STA.

In some embodiments in combination with the second aspect, in some embodiments, the common information field includes a more TFs subfield, in which the more TFs subfield indicates, via a second value, that at least one second TF is sent after sending the first TF, and each of the at least one second TF is used to allocate a UL dRU to at least one STA.

In the above embodiments, when the AP may not complete UL dRU allocation via the first TF, it may indicate to the STA via the more TFs subfield that the AP will also allocate the UL dRU via the at least one second TF after sending the first TF, which may ensure that the STA obtains the UL dRU allocated by the AP, and helps to improve allocation efficiency of the UL dRU.

In some embodiments in combination with the second aspect, in some embodiments, the common information field includes a UL spatial reuse subfield, in which the UL spatial reuse subfield indicates that at least one STA is allowed to simultaneously perform UL data transmission.

In the above embodiments, the first STA may determine via the spatial reuse subfield that the AP allows each STA to simultaneously perform the UL data transmission, thus being able to send the UL PPDU to the AP simultaneously with other STAs, which is beneficial to improve efficiency of the UL data transmission and system throughput.

In some embodiments in combination with the second aspect, in some embodiments, the common information field includes a UL length subfield, in which the UL length subfield indicates a length of a UL TB PPDU.

In the above embodiments, the first STA may indicate the length of the UL TB PPDU via the UL length subfield, so as to send a UL TB PPDU that meets a length requirement, thus improving efficiency of the UL data transmission.

In some embodiments in combination with the second aspect, in some embodiments, the common information field includes a number of LTFs subfield, in which the number of LTFs subfield indicates a number of LTFs of a UL TB PPDU.

In the above embodiments, the first STA may determine the number of LTFs of the UL TB PPDU via the number of LTFs subfield, which helps to improve efficiency of the first STA sending the UL TB PPDU.

According to a third aspect, the embodiments of the present disclosure provide an AP, including:

According to a fourth aspect, the embodiments of the present disclosure provide an STA, including:

According to a fifth aspect, the embodiments of the present disclosure provide an AP, including one or more processors, in which the AP is configured to perform the method for resource allocation provided in the first aspect and the optional implementations of the first aspect.

According to a sixth aspect, the embodiments of the present disclosure provide an STA, including one or more processors, in which the STA is configured to perform the method for resource allocation provided in the second aspect and the optional implementations of the second aspect.

According to a seventh aspect, the embodiments of the present disclosure provide a communication device, including one or more processors, in which the communication device may act as an AP to perform the method for resource allocation provided in the first aspect and the optional implementations of the first aspect, and the communication device may act as an STA to perform the method for resource allocation provided in the second aspect and the optional implementations of the second aspect.

According to an eighth aspect, the embodiments of the present disclosure provide a storage medium for storing instructions that, when executed on a communication device, cause the communication device to perform the method described in the first aspect, the second aspect, the optional implementations of the first aspect, and the optional implementations of the second aspect.

According to a ninth aspect, the embodiments of the present disclosure provide a program product that, when executed by a communication device, causes the communication device to perform the method described in the first aspect, the second aspect, the optional implementations of the first aspect, and the optional implementations of the second aspect.

According to a tenth aspect, the embodiments of the present disclosure provide a computer program that, when executed on a computer, causes the computer to perform the method described in the first aspect, the second aspect, the optional implementations of the first aspect, and the optional implementations of the second aspect.

According to an eleventh aspect, the embodiments of the present disclosure provide a chip or a chip system, including a processing circuit, configured to perform the method described in the first aspect, the second aspect, the optional implementations of the first aspect, and the optional implementations of the second aspect.

According to a twelfth aspect, the embodiments of the present disclosure provide a communication system, including an AP and at least one STA, in which the AP is configured to perform the method described in the first aspect and the optional implementations of the first aspect, and each of the at least one STA is configured to perform the method described in the second aspect and the optional implementations of the second aspect.

It may be understood that the AP, the STA, the communication system, the communication device, the storage medium, the program product, the computer program, the chip or the chip system are all used to perform the method in the embodiments of the present disclosure. Therefore, beneficial effects that may be achieved may refer to the beneficial effects in the corresponding methods, which will not be repeated here.

The embodiments of the present disclosure provide a method for resource allocation, a device, and a storage medium. In some embodiments, method for resource allocation and method for processing information may be used interchangeably, communication device and device for processing information may be used interchangeably, and system for processing information and communication system may be used interchangeably.

The embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in the embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in a same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be a same apparatus or different apparatuses, and their types may be the same or different. Similarly, if the described object is "information", "first information" and "second information" may be same information or different information, and their content may be the same or different.

In some embodiments, "including A", "containing A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

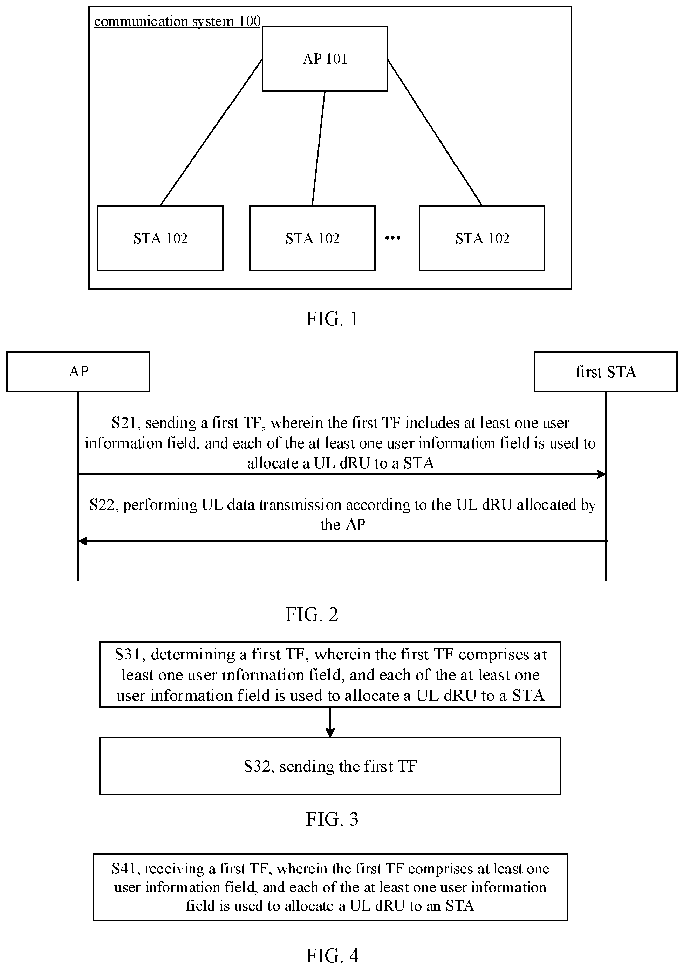

FIG. 1 is a schematic diagram of an architecture of a communication system according to the embodiments of the present disclosure.

As shown in FIG. 1, a communication system 100 includes an AP 101 and at least one STA 102.

The AP 101 and the STA 102 may be independent devices, or devices supporting the multi-link operation (MLO) technology. For example, the AP 101 may be an AP multi-link device (AP MLD), and the STA 102 may be a non-AP multi-link device (Non-AP MLD).

In some embodiments, the AP 101 may be a terminal or a network device with a wireless fidelity (WiFi) chip.

In some embodiments, the STA 102 may be a device including a wireless communication chip supporting a WiFi communication function, a wireless sensor, or a wireless communication terminal. Optionally, the wireless communication terminal may be, for example, at least one of a mobile phone, a wearable device, an Internet of Things device supporting a WiFi communication function, a car with a WiFi communication function, a smart car, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, which is not limited herein.

It may be understood that the communication system in the embodiments of the present disclosure is to clearly illustrate the technical solution of embodiments of the present disclosure, and does not constitute a limitation on the technical solution in the embodiments of the present disclosure. Those skilled in the art may know, with evolution of the system architecture and emergence of new service scenarios, the technical solution in the embodiments of the disclosure is also applicable to similar technical problems.

The following embodiments of the present disclosure may be applied to the communication system 100 shown in FIG. 1, or to some entities, which are not limited to this. Entities in FIG. 1 are illustrative. The communication system may include all or some of the entities in FIG. 1, or may include other entities not shown in FIG. 1. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

The embodiments of the present disclosure may be applied to a wireless local area network (WLAN), for example, may be applied to IEEE 802.11 system standards, such as 802.11a/b/g standard, 802.11n standard, 802.11ac standard, 802.11ax standard, or its next generation, such as 802.11bn, 802.11bf, 802.11be standard. The 802.11be standard is also known as Wi-Fi7 or extremely high-throughput (EHT) standard or later generation standard. Or, the embodiments of the present disclosure may also be applied to WLAN systems such as the Internet of Things (IoT) network or the Vehicle to X (V2X) network. Of course, the embodiments of the present disclosure may also be applied to other possible communication systems, such as long term evolution (LTE) system, LTE frequency division duplex (FDD) system, LTE time division duplex (TDD) system, universal mobile telecommunication system (UMTS), worldwide interoperability for microwave access (WiMAX) communication system, and future 5th generation (5G) communication system, etc.

Technical solutions in the embodiments of the present disclosure will be clearly and completely described below with reference to the accompanying drawings in the embodiments of the present disclosure. Obviously, the embodiments described here are only part of the embodiments of the present disclosure and are not all embodiments of the present disclosure. Based on the embodiments of the present disclosure, other embodiments obtained by those skilled in the art without creative labor are within the scope of the present disclosure.

FIG. 2 is a schematic diagram of an interaction of a method for resource allocation according to the embodiments of the present disclosure. The method for resource allocation shown in FIG. 2 includes following steps at S21 to S22.

At S21, an AP sends a first TF, the first TF includes at least one user information field, and each of the at least one user information field is used to allocate a UL dRU to an STA.

In some embodiments, the AP may determine and send the first TF to at least one STA, so as to allocate a UL dRU for UL data transmission to the at least one STA.

The first TF includes a user information list field, the user information list field includes at least one user info field, and each user info field corresponds to a STA and is used to allocate a UL dRU to it.

In some embodiments, each of the at least one user information field includes a dRU allocation subfield, and the dRU allocation subfield included in each of the at least one user information field is used to allocate the UL dRU to the corresponding STA.

The dRU allocation subfield in each of the at least one user information field may indicate the UL dRU allocated to the corresponding STA via at least one bit.

For example, the dRU allocation subfield in each of the at least one user information field may indicate the UL dRU allocated to the corresponding STA via 7 bits.

A UL dRU allocated by the AP to each STA via the first TF correspond to a different dRU index value, that is, UL dRUs allocated by the AP to each STA are different from each other.

In some embodiments, a format of the UL dRU allocated by the AP to each STA may be at least one of: 26-tone-dRU; 52-tone-dRU; 106-tone-dRU; 242-tone-dRU; 484-tone-dRU; 26-tone-dRU +52-tone-dRU; 26-tone-dRU +106-tone-dRU; or 52-tone-dRU +106-tone-dRU.

26-tone-dRU +52-tone-dRU, 26-tone-dRU +106-tone-dRU, and 52-tone-dRU +106-tone-dRU are multiple dRUs (M-dRUs).$52 - tone - dRU = 26 - tone - dRU + 26 - tone - dRU .$$106 - tone - dRU = 52 - tone - dRU + 52 - tone - dRU + 2 null tones .$$242 - tone - dRU = 106 - tone - dRU + 106 - tone - dRU + 26 - tone - dRU + 4 null tones .$$484 - tone - dRU = 242 - tone - dRU + 242 - tone - dRU .$

In some embodiments, the UL dRU allocated by the AP to each STA is related to an operating BW of the STA, and the operating BW includes 20 MHz, 40 MHz, 80 MHz, 160 MHz, or 320 MHz.

The operating BW of the STA may be understood as a channel BW or operating BW for the STA to perform UL data transmission.

Each operating BW may correspond to at least one dRU format. When allocating the UL dRU to each STA, the AP may allocate the UL dRU using one or more dRU formats corresponding to the operating BW of the STA.

For example, when the operating BW of the STA is 20MHz, the AP may allocate the UL dRU to the STA using one or more combinations of dRU formats such as 26-tone-dRU, 52-tone-dRU, and 106-tone-dRU, or may allocate the UL dRU to the STA using an M-dRU format such as 26-tone-dRU+52-tone-dRU.

For example, when the operating BW of the STA is 40MHz, the AP may allocate the UL dRU to the STA using one or more combinations of dRU formats such as 26-tone-dRU, 52-tone-dRU, 106-tone-dRU, and 242-tone-dRU, or may allocate the UL dRU to the STA using an M-dRU format such as 26-tone-dRU+52-tone-dRU, 26-tone-dRU+106-tone-dRU, and 52-tone-dRU+106-tone-dRU.

For example, when the operating BW of the STA is 80 MHz, the AP may allocate the UL dRU to the STA using one or a combination of dRU formats such as 26-tone-dRU, 52-tone-dRU, 106-tone-dRU, 242-tone-dRU, and 484-tone-dRU, or may allocate the UL dRU to the STA using any one of the above M-dRU formats.

For example, when the operating BW of the STA is 160 MHz, the AP may allocate the UL dRU to the STA using one or a combination of dRU formats such as 26-tone-dRU, 52-tone-dRU, 106-tone-dRU, 242-tone-dRU, and 484-tone-dRU, or may allocate the UL dRU to the STA using any one of the above M-dRU formats.

In some embodiments, each of the at least one user information field further includes a UL MCS subfield, and the UL MCS subfield indicates an MCS sampled by a corresponding STA during UL data transmission, i.e., indicates an MCS adopted by a corresponding STA when sending a UL PHY PPDU.

In some embodiments, each of the at least one user information field further includes an SS allocation subfield, in which the SS allocation subfield indicates SS information for a corresponding STA during UL data transmission, i.e., indicates SS information for a corresponding STA when sending a UL PPDU.

The SS information includes a starting SS and the number of SSs.

In some embodiments, each of the at least one user information field further includes a UL target receive power subfield, in which the UL target receive power subfield indicates a transmit power value of a corresponding STA during UL data transmission, i.e., indicates a transmit power value of a UL PPDU that the AP expects to receive.

In some embodiments, each of the at least one user information field further includes an AID subfield, in which the AID subfield indicates an AID allocated by the AP to a corresponding STA.

Since each STA corresponds to a different AID, each of the at least one user information field may distinguish different STAs via the AID indicated by an AID field.

For example, when each of the at least one user information field includes a dRU allocation subfield, the dRU allocation subfield in each of the at least one user information field corresponds to the AID subfield. That is, each of the at least one user information field indicates, via the AID field, that the dRU allocation subfield in the user information field is used to allocate a UL dRU to an STA corresponding to the AID indicated by an AID in the user information field.

In some embodiments, the first TF includes a common information field, and the common information field includes a trigger type subfield, in which the trigger type subfield indicates, via a first value, that the first TF is used to allocate the UL dRU to at least one STA.

As an example, the trigger type subfield may indicate a type (or function) of the first TF via different identifier values, specifically as shown in the following table.

| identifier | type of first TF |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Ranging |
| 9-15 | Allocating UL dRU |

As shown in the above table, a first value of the trigger type subfield may be any value from 9 to 15, used to indicate allocating the UL dRU to at least one STA.

In some embodiments, the first TF includes a common information field, and the common information field includes a UL BW subfield, in which the UL BW subfield indicates a maximum channel BW corresponding to a UL dRU allocated to each STA.

The UL BW subfield may include a first identifier bit and a second identifier bit. When identifier values of the first identifier bit and the second identifier bit are both a third value, the UL BW subfield indicates that the maximum channel BW corresponding to the UL dRU allocated to each STA is 20 MHz. When an identifier value of the first identifier bit is a third value and an identifier value of the second identifier bit is a fourth value, the UL BW subfield indicates that the maximum channel BW corresponding to the UL dRU allocated to each STA is 40 MHz. When an identifier value of the first identifier bit is the fourth value and an identifier value of the second identifier bit is a third value, the UL BW subfield indicates that the maximum channel BW corresponding to the UL dRU allocated to each STA is 80 MHz. When the identifier values of the first identifier bit and the second identifier bit are both a fourth value, the UL BW subfield indicates that the maximum channel BW corresponding to the UL dRU allocated to each STA is 160 MHz.

The third value may be 0, and the fourth value may be 1.

The UL BW subfield may include a first identifier bit, a second identifier bit, and a third identifier bit, and the first identifier bit, the second identifier bit, and the third identifier bit indicate, via a specific combination of identifier values, that the maximum channel BW corresponding to the UL dRU allocated to each STA is 320 MHz.

For example, the specific combination of identifier values may be that the identifier value of the first identifier bit is the third value, the identifier value of the second identifier bit is the fourth value, and the identifier value of the third identifier bit is the fourth value, which is not limited in the present disclosure.

In some embodiments, the first TF includes a common information field, and the common information field includes a more TFs subfield, in which the more TFs subfield indicates, via a second value, that the AP sends at least one second TF after sending the first TF within a transmit opportunity (TXOP).

Each of the at least one second TF is used to allocate a UL dRU to at least one STA.

That is, after the AP sends the first TF, if an identifier value of the more TFs subfield in the first TF is the second value, it indicates that the AP will send at least one second TF after sending the first TF, so as to allocate the UL dRU to a plurality of STAs via the first TF and the second TF.

In some embodiments, the first TF includes a common information field, and the common information field includes a UL spatial reuse subfield, in which the UL spatial reuse subfield indicates that at least one STA is allowed to simultaneously perform UL data transmission, i.e., indicates that each STA sends a UL PPDU simultaneously.

In some embodiments, the first TF includes a common information field, and the common information field includes a UL length subfield, in which the UL length subfield indicates a length of a UL TB PPDU sent by the STA.

In some embodiments, the first TF includes a common information field, and the common information field includes a number of LTFs subfield, in which the number of LTFs subfield indicates a number of LTFs of a UL TB PPDU sent by the STA.

The number of LTFs is related to a number of user information fields in the first TF, i.e., related to a number of STAs to which the UL dRU is to be allocated. For example, if a plurality of STAs communicate with the AP simultaneously and each STA uses a different SS, the number of LTFs needs to match the number of STAs and the number of SSs. Specifically, if there are N STAs, and each STA uses M SSs, a required number of LTFs is N*M.

As an example, a format of the first TF may be as follows.

| | | | | | | | |
|---|---|---|---|---|---|---|---|
| Frame Control | Duration | RA | TA | Common Info | User Info List | Padding | FCS |

The User Info List field in the first TF includes at least one User Info field, and a format of each User Info may be as follows.

| | | | | | |
|---|---|---|---|---|---|
| AID | dRU Allocation | UL MCS | SS allocation | UL Target Receive Power | ... |

Each of the at least one user information field includes a dRU allocation subfield and an AID subfield, in which the dRU allocation subfield is used to allocate a UL dRU to an STA associated with an AID indicated by the AID subfield. Each of the at least one user information field further includes a UL MCS subfield, an SS allocation subfield, and a UL target receive power subfield. The UL MCS subfield indicates an MCS adopted by the STA associated with an AID indicated by the AID subfield when sending a UL PPDU. The SS allocation subfield indicates SS information for the STA associated with an AID indicated by the AID subfield when sending a UL PPDU. The UL target receive power subfield indicates a transmit power value of a UL PPDU sent by an STA associated with an AID indicated by the AID subfield.

A format of the Common Info field in the first TF may be as follows.

| | | | | | | |
|---|---|---|---|---|---|---|
| Trigger Type | UL Length | More TF | UL BW | UL Spatial Reuse | Number of LTF | ... |

In the Common Info field, the Trigger Type subfield indicates, via a first value, that the first TF is used to allocate the UL dRU. The UL BW subfield indicates a maximum channel BW corresponding to a UL dRU allocated to each STA. The more TFs subfield indicates, via a second value, that the AP sends at least one second TF for allocating the UL dRU after sending the first TF. The UL spatial reuse subfield indicates that the AP allows at least one STA to simultaneously perform UL data transmission. The UL length subfield indicates a length of a UL TB PPDU. The Number of LTFs subfield indicates a number of LTFs of a UL TB PPDU.

The User Info field and the Common Info field may also include other information subfields, which will not be described in the embodiments of the present disclosure. Moreover, a positional relationship and a number of bits occupied by each information subfield in the User Info field and the Common Info field are not limited in the embodiments of the present disclosure.

At S22, a first STA performs UL data transmission according to the UL dRU allocated by the AP.

In some embodiments, after receiving the first TF, the first STA may determine the UL dRU allocated to it by the AP, and then send a UL PPDU to the AP according to the UL dRU allocated by the AP.

The method for allocating a resource in the embodiments of the present disclosure may include at least one of the above steps and embodiments. For example, any one of S21 to S22 may be implemented as an independent embodiment, and S21 to S22 may be implemented as an independent embodiment, which is not limited herein.

FIG. 3 is a first flowchart of a method for resource allocation according to the embodiments of the present disclosure. As shown in FIG. 3, the method is performed by an AP, including following steps at S31 to S32.

At S31, a first TF is determined, in which the first TF includes at least one user information field, and each of the at least one user information field is used to allocate a UL dRU to an STA.

In some embodiments, the AP may determine the first TF to allocate the UL dRU for UL data transmission to at least one STA via the first TF.

The first TF includes a user information list field, the user information list field includes at least one user information field, and each user information field corresponds to a STA and is used to allocate a UL dRU to it.

In some embodiments, each of the at least one user information field includes a dRU allocation subfield, and the dRU allocation subfield included in each of the at least one user information field is used to allocate the UL dRU to the corresponding STA.

The dRU allocation subfield in each of the at least one user information field may indicate the UL dRU allocated to the corresponding STA via at least one bit.

For example, the dRU allocation subfield in each of the at least one user information field may indicate the UL dRU allocated to the corresponding STA via 7 bits.

A UL dRU allocated by the AP to each STA via the first TF correspond to a different dRU index value, that is, UL dRUs allocated by the AP to each STA are different from each other.

In some embodiments, a format of the UL dRU allocated by the AP to each STA may be at least one of: 26-tone-dRU; 52-tone-dRU; 106-tone-dRU; 242-tone-dRU; 484-tone-dRU; 26-tone-dRU +52-tone-dRU; 26-tone-dRU +106-tone-dRU; or 52-tone-dRU +106-tone-dRU.

26-tone-dRU +52-tone-dRU, 26-tone-dRU +106-tone-dRU, and 52-tone-dRU +106-tone-dRU are M-dRUs.$52 - tone - dRU = 26 - tone - dRU + 26 - tone - dRU .$$106 - tone - dRU = 52 - tone - dRU + 52 - tone - dRU + 2 null tones .$$242 - tone - dRU = 106 - tone - dRU + 106 - tone - dRU + 26 - tone - dRU + 4 null tones .$$484 - tone - dRU = 242 - tone - dRU + 242 - tone - dRU .$

In some embodiments, the UL dRU allocated by the AP to each STA is related to an operating BW of the STA, and the operating BW includes 20 MHz, 40 MHz, 80 MHz, 160 MHz, or 320 MHz.

The operating BW of the STA may be understood as a channel BW or operating BW for the STA to perform UL data transmission.

Each operating BW may correspond to at least one dRU format. When allocating the UL dRU to each STA, the AP may allocate the UL dRU using one or more dRU formats corresponding to the operating BW of the STA.

For example, when the operating BW of the STA is 20MHz, the AP may allocate the UL dRU to the STA using one or more combinations of dRU formats such as 26-tone-dRU, 52-tone-dRU, and 106-tone-dRU, or may allocate the UL dRU to the STA using an M-dRU format such as 26-tone-dRU+52-tone-dRU.

For example, when the operating BW of the STA is 40MHz, the AP may allocate the UL dRU to the STA using one or more combinations of dRU formats such as 26-tone-dRU, 52-tone-dRU, 106-tone-dRU, and 242-tone-dRU, or may allocate the UL dRU to the STA using an M-dRU format such as 26-tone-dRU+52-tone-dRU, 26-tone-dRU+106-tone-dRU, and 52-tone-dRU+106-tone-dRU.

For example, when the operating BW of the STA is 80 MHz, the AP may allocate the UL dRU to the STA using one or a combination of dRU formats such as 26-tone-dRU, 52-tone-dRU, 106-tone-dRU, 242-tone-dRU, and 484-tone-dRU, or may allocate the UL dRU to the STA using any one of the above M-dRU formats.

For example, when the operating BW of the STA is 160 MHz, the AP may allocate the UL dRU to the STA using one or a combination of dRU formats such as 26-tone-dRU, 52-tone-dRU, 106-tone-dRU, 242-tone-dRU, and 484-tone-dRU, or may allocate the UL dRU to the STA using any one of the above M-dRU formats.

In some embodiments, each of the at least one user information field further includes a UL MCS subfield, and the UL MCS subfield indicates an MCS sampled by a corresponding STA during UL data transmission, i.e., indicates an MCS adopted by a corresponding STA when sending a UL PHY PPDU.

In some embodiments, each of the at least one user information field further includes an SS allocation subfield, in which the SS allocation subfield indicates SS information for a corresponding STA during UL data transmission, i.e., indicates SS information for a corresponding STA when sending a UL PPDU.

The SS information includes a starting SS and a number of SSs.

In some embodiments, each of the at least one user information field further includes a UL target receive power subfield, in which the UL target receive power subfield indicates a transmit power value of a corresponding STA during UL data transmission, i.e., indicates a transmit power value of a UL PPDU that the AP expects to receive.

In some embodiments, each of the at least one user information field further includes an AID subfield, in which the AID subfield indicates an AID allocated by the AP to a corresponding STA.

Since each STA corresponds to a different AID, each of the at least one user information field may distinguish different STAs via the AID indicated by an AID field.

For example, when each of the at least one user information field includes a dRU allocation subfield, the dRU allocation subfield in each of the at least one user information field corresponds to the AID subfield. That is, each of the at least one user information field indicates, via the AID field, that the dRU allocation subfield in the user information field is used to allocate a UL dRU to an STA corresponding to the AID indicated by an AID in the user information field.

In some embodiments, the first TF includes a common information field, and the common information field includes a trigger type subfield, in which the trigger type subfield indicates, via a first value, that the first TF is used to allocate the UL dRU to at least one STA.

As an example, the trigger type subfield may indicate a type (or function) of the first TF via different identifier values, specifically as shown in the following table.

| identifier | type of first TF |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Ranging |
| 9-15 | Allocating UL dRU |

As shown in the above table, a first value of the trigger type subfield may be any value from 9 to 15, used to indicate allocating the UL dRU to at least one STA.

In some embodiments, the first TF includes a common information field, and the common information field includes a UL BW subfield, in which the UL BW subfield indicates a maximum channel BW corresponding to a UL dRU allocated to each STA.

The UL BW subfield may include a first identifier bit and a second identifier bit. When identifier values of the first identifier bit and the second identifier bit are both a third value, the UL BW subfield indicates that the maximum channel BW corresponding to the UL dRU allocated to each STA is 20 MHz. When an identifier value of the first identifier bit is a third value and an identifier value of the second identifier bit is a fourth value, the UL BW subfield indicates that the maximum channel BW corresponding to the UL dRU allocated to each STA is 40 MHz. When an identifier value of the first identifier bit is the fourth value and an identifier value of the second identifier bit is a third value, the UL BW subfield indicates that the maximum channel BW corresponding to the UL dRU allocated to each STA is 80 MHz. When the identifier values of the first identifier bit and the second identifier bit are both a fourth value, the UL BW subfield indicates that the maximum channel BW corresponding to the UL dRU allocated to each STA is 160 MHz.

The third value may be 0, and the fourth value may be 1.

The UL BW subfield may include a first identifier bit, a second identifier bit, and a third identifier bit, and the first identifier bit, the second identifier bit, and the third identifier bit indicate, via a specific combination of identifier values, that the maximum channel BW corresponding to the UL dRU allocated to each STA is 320 MHz.

For example, the specific combination of identifier values may be that the identifier value of the first identifier bit is the third value, the identifier value of the second identifier bit is the fourth value, and the identifier value of the third identifier bit is the fourth value, which is not limited in the present disclosure.

In some embodiments, the first TF includes a common information field, and the common information field includes a more TFs subfield, in which the more TFs subfield indicates, via a second value, that the AP sends at least one second TF after sending the first TF within a TXOP.

Each of the at least one second TF is used to allocate a UL dRU to at least one STA.

In some embodiments, the first TF includes a common information field, and the common information field includes a UL spatial reuse subfield, in which the UL spatial reuse subfield indicates that at least one STA is allowed to simultaneously perform UL data transmission, i.e., indicates that each STA sends a UL PPDU simultaneously.

In some embodiments, the first TF includes a common information field, and the common information field includes a UL length subfield, in which the UL length subfield indicates a length of a UL TB PPDU sent by the STA.

In some embodiments, the first TF includes a common information field, and the common information field includes the number of LTFs subfield, in which the number of LTFs subfield indicates a number of LTFs of a UL TB PPDU sent by the STA.

The number of LTFs is related to a number of user information fields in the first TF, i.e., related to a number of STAs to which the UL dRU is to be allocated. For example, if a plurality of STAs communicate with the AP simultaneously and each STA uses a different SS, the number of LTFs needs to match the number of STAs and the number of SSs. Specifically, if there are N STAs, and each STA uses M SSs, a required number of LTFs is N*M.

At S32, the first TF is sent.

In some embodiments, after determining the first TF, the AP may send the first TF to at least one STA to allocate a UL dRU to each STA.

After that, the AP may receive a UL PPDU sent by each STA according to the UL dRU allocated to each STA.

The method for allocating a resource in the embodiments of the present disclosure may include at least one of the above steps and embodiments. For example, any one of S31 to S32 may be implemented as an independent embodiment, and S31 to S32 may be implemented as an independent embodiment, which is not limited herein.

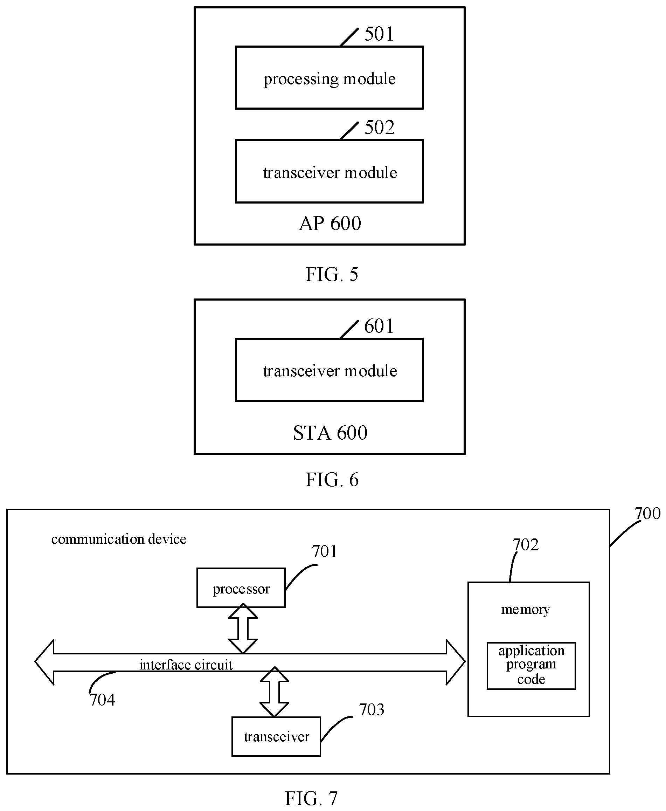

FIG. 4 is a second flowchart of a method for resource allocation according to the embodiments of the present disclosure. As shown in FIG. 5, the method is performed by a first STA, including a following step at S41.

At S41, a first TF is received, in which the first TF includes at least one user information field, and each of the at least one user information field is used to allocate a UL dRU to an STA.

In some embodiments, a relevant description of the first TF may refer to the description of the first TF in FIG. 2 and/or FIG. 3, and will not be repeated here.

In some embodiments, the first STA is any STA to which the AP allocates the UL dRU. After receiving the first TF, the first STA may determine the UL dRU allocated to the first STA by the AP, and then send a UL PPDU to the AP according to the UL dRU allocated by the AP.

FIG. 5 is a block diagram of an AP according to the embodiments of the present disclosure. As shown in FIG. 5, an AP 500 may include: a processing module 501 and a transceiver module 502.

In some embodiments, the processing module 501 is configured to determine a first TF, in which the first TF includes at least one user information field, each of the at least one user information field is used to allocate a UL dRU to an STA; and the transceiver module 502 is configured to send the first TF.

Optionally, the transceiver module 502 is configured to perform at least one of the transceiving steps performed by the AP in any one of the above methods (e.g., S21 and S32, which is not limited herein), which will not be repeated here.

Optionally, the processing module 501 is configured to perform at least one of the processing steps performed by the AP in any one of the above methods (e.g., S31, which is not limited herein), which will not be repeated here.

FIG. 6 is a block diagram of an STA according to the embodiments of the present disclosure. As shown in FIG. 6, an STA 600 may include: a transceiver module 601.

In some embodiments, the transceiver module 601 is configured to: receive a first TF, in which the first TF includes at least one user information field, each of the at least one user information field is used to allocate a UL dRU to the STA.

Optionally, the transceiver module 601 is configured to perform at least one of the transceiving steps performed by the first STA in any one of the above methods (e.g., S22 and S41, which is not limited herein), which will not be repeated here.

It should be understood that the division of units or modules above is merely a division of logical functions. In actual implementations, the units or modules may be fully or partially integrated into a single physical entity or may be physically separated. In addition, the units or modules may be implemented in a form of a processor invoking software. For example, the apparatus may include a processor, which is connected to a memory for storing instructions. The processor invokes the instructions stored in the memory to implement any one of the above methods or the functions of the units or modules. The processor may be a general-purpose processor, such as a central processing unit (CPU) or a microprocessor, and the memory may be internal or external to the apparatus. Or, the units or modules in the apparatus may be implemented in a form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in a form of the processor invoking software, or fully implemented in a form of the hardware circuit, or partially implemented in a form of the processor invoking software and the remaining part implemented in a form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor a hardware circuit implemented by an ASIC or a PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 7 is a block diagram of a communication device according to the embodiments of the present disclosure. The communication device 700 may be an AP or an STA, or may be a chip, a chip system, or a processor that supports the AP or the STA to implement any one of the above methods. The communication device may be used to implement the methods described in the above method embodiments, and details may refer to the description in the above method embodiments.

As shown in FIG. 7, the communication device 700 may include one or more processors 701. The processor 701 may be a general-purpose processor or a special-purpose processor. For example, it may be a baseband processor or a central processor. The baseband processor is configured to process communication protocols and communication data, and the central processor is configured to control communication devices (such as base stations, baseband chips, terminals, terminal chips, DU or CU, etc.) to execute computer programs and process computer program data. The communication device 700 is configured to perform any one of the above methods.

In some embodiments, the communication device 700 further includes one or more memories 702 for storing instructions. Optionally, all or part of the memories 702 may also be located outside the communication device 700.

In some embodiments, the communication device 700 further includes one or more transceivers 703. When the communication device 700 includes one or more transceivers 703, the transceiver 703 performs at least one of communication steps such as sending and/or receiving in the above methods (e.g., S21 to S22, S32, and S41, which is not limited herein), and the processor 701 performs at least one of other steps (e.g., S31, which is not limited herein).

In some embodiments, the transceiver may include a receiver and/or a transmitter, which may be separate or integrated. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 700 further includes one or more interface circuits 704. The interface circuit 704 is connected to the memory 702 and may be used to receive signals from the memory 702 or other devices, and send the signals to the memory 702 or other devices. For example, the interface circuit 704 may read instructions stored in the memory 702 and send the instructions to the processor 701.

The communication device 700 in the description of the above embodiments may be an AP or an STA, but the scope of the communication device 700 described in the disclosure is not limited thereto, and the structure of the communication device 700 may not be limited by FIG. 7. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

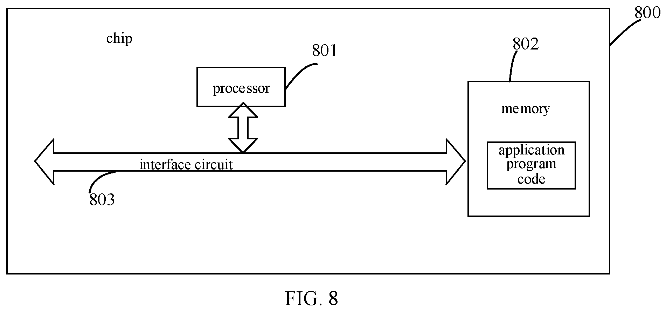

FIG. 8 is a block diagram of a chip 8000 according to the embodiments of the present disclosure. The chip 8000 includes one or more processors 8001, and the chip 8000 is configured to perform any one of the above methods.

In some embodiments, the chip 8000 further includes one or more interface circuits 8003. Optionally, the interface circuit 8003 is connected to a memory 8002, and the interface circuit 8003 may be used to receive signals from the memory 8002 or other devices, and the interface circuit 8003 may be used to send the signals to the memory 8002 or other devices. For example, the interface circuit 8003 may read instructions stored in the memory 8002 and send the instructions to the processor 8001.

In some embodiments, the interface circuit 8003 performs at least one of communication steps such as sending and/or receiving in the above methods (e.g., S21 to S22, S32, and S41, which is not limited herein), and the processor 8001 performs at least one of other steps (e.g., S31, which is not limited herein).

In some embodiments, terms such as interface circuit, interface, transceiver pin, transceiver, etc. may be used interchangeably.

In some embodiments, the chip 8000 further includes one or more memories 8002 for storing instructions. Optionally, all or some of the memories 8002 may be located outside the chip 8000.

The present disclosure also provides a storage medium for storing instructions. When the instructions are running on the communication device 700, the communication device 700 is caused to implement any one of the above methods. Optionally, the storage medium is an electronic storage medium. Optionally, the storage medium is a computer-readable storage medium, which is not limited herein, and it may also be a storage medium readable by other devices. Optionally, the storage medium may be a non-transitory storage medium, which is not limited herein, and it may also be a transitory storage medium.

The present disclosure also provides a program product. When the program product is executed by the communication device 700, the communication device 700 is caused to implement any one of the above methods. Optionally, the program product is a computer program product.

The present disclosure also provides a computer program. When the computer program is running on a computer, the computer is caused to perform any one of the above methods. The above description is merely preferred embodiments of the present disclosure and an explanation of a technical principle applied. Those skilled in the art should understand that a scope of the present disclosure is not limited to a technical solution formed by a specific combination of above technical features, but also includes other technical solutions formed by any combination of the above technical features or their equivalent features without departing from the principle of the present disclosure. For example, a technical solution formed by replacing above features with technical features, including (but are not limited to) those having similar functions, disclosed in the present disclosure.

## Claims

1. A method for allocating a resource, comprising:
determining, by an access point (AP), a first trigger frame (TF), wherein the first TF comprises at least one user information field, and each of the at least one user information field is used to allocate an uplink (UL) distributed resource unit (dRU) to a station (STA); and
sending, by the AP, the first TF.

2. The method of claim 1, wherein each of the at least one user information field comprises a dRU allocation subfield, the dRU allocation subfield is used to allocate a UL dRU to a corresponding STA,
wherein a UL dRU allocated to each STA corresponds to a different dRU index value.

3. The method of claim 2, wherein the UL dRU allocated to each STA is related to an operating bandwidth (BW) of the corresponding STA, the operating BW comprises 20 MHz, 40 MHz, 80 MHz, 160 MHz, or 320 MHz.

4. The method of claim 1, wherein each of the at least one user information field further comprises at least one of:
a UL modulation and coding scheme (MCS) subfield, wherein the UL MCS subfield indicates an MCS to be used by a corresponding STA when sending a UL physical layer (PHY) protocol data unit (PPDU);
a spatial stream (SS) allocation subfield, wherein the SS allocation subfield indicates SS information for a corresponding STA when sending a UL PPDU, wherein the SS information comprises a starting SS and a number of SSs;
a UL target receive power subfield, wherein the UL target receive power subfield indicates a transmit power value of a UL PPDU sent by a corresponding STA; or
an association identifier (AID) subfield, wherein the AID subfield indicates an AID allocated by the AP to a corresponding STA.

5. The method of claim 1, wherein the first TF comprises a common information field, and the common information field comprises at least one of:
a trigger type subfield, wherein the trigger type subfield indicates, via a first value, that the first TF is used to allocate the UL dRU;
a UL BW subfield, wherein the UL BW subfield indicates a maximum channel BW corresponding to a UL dRU allocated to each STA;
a more TFs subfield, wherein the more TFs subfield indicates, via a second value, that at least one second TF is sent after sending the first TF, and each of the at least one second TF is used to allocate a UL dRU to at least one STA;
a UL spatial reuse subfield, wherein the UL spatial reuse subfield indicates that at least one STA is allowed to simultaneously perform UL data transmission;
a UL length subfield, wherein the UL length subfield indicates a length of a UL trigger-based (TB) PPDU; or
a number of long training fields (LTFs) subfield, wherein the number of LTFs subfield indicates a number of LTFs of a UL TB PPDU.

6. A method for allocating a resource, comprising:
receiving, by a first station (STA), a first trigger frame (TF), wherein the first TF comprises at least one user information field, and each of the at least one user information field is used to allocate an uplink (UL) distributed resource unit (dRU) to an STA.

7. The method of claim 6, wherein each of the at least one user information field comprises a dRU allocation subfield, the dRU allocation subfield is used to allocate a UL dRU to a corresponding STA,
wherein a UL dRU allocated to each STA corresponds to a different dRU index value.

8. The method of claim 7, wherein the UL dRU allocated to each STA is related to an operating bandwidth (BW) of the corresponding STA, the operating BW comprises 20 MHz, 40 MHz, 80 MHz, 160 MHz, or 320 MHz.

9. The method of claim 6, wherein each of the at least one user information field further comprises at least one of:
a UL modulation and coding scheme (MCS) subfield, wherein the UL MCS subfield indicates an MCS to be used by a corresponding STA when sending a UL physical layer (PHY) protocol data unit (PPDU);
a spatial stream (SS) allocation subfield, wherein the SS allocation subfield indicates SS information for a corresponding STA when sending a UL PPDU, wherein the SS information comprises a starting SS and a number of SSs;
a UL target receive power subfield, wherein the UL target receive power subfield indicates a transmit power value of a UL PPDU sent by a corresponding STA; or
an association identifier (AID) subfield, wherein the AID subfield indicates an AID allocated by the AP to a corresponding STA.

10. The method of claim 6, wherein the first TF comprises a common information field, and the common information field comprises at least one of:
a trigger type subfield, wherein the trigger type subfield indicates, via a first value, that the first TF is used to allocate the UL dRU;
a UL BW subfield, wherein the UL BW subfield indicates a maximum channel BW corresponding to a UL dRU allocated to each STA by an AP;
a more TFs subfield, wherein the more TFs subfield indicates, via a second value, that an AP sends at least one second TF after sending the first TF, and each of the at least one second TF is used to allocate a UL dRU to at least one STA;
a UL spatial reuse subfield, wherein the UL spatial reuse subfield indicates that an AP allows at least one STA to simultaneously perform UL data transmission;
a UL length subfield, wherein the UL length subfield indicates a length of a UL trigger-based (TB) PPDU; or
a number of long training fields (LTFs) subfield, wherein the number of LTFs subfield indicates a number of LTFs of a UL TB PPDU.

11. An access point (AP), comprising:
a processing module, configured to determine a first trigger frame (TF), wherein the first TF comprises at least one user information field, each of the at least one user information field is used to allocate an uplink (UL) distributed resource unit (dRU) to a station (STA); and
a transceiver module, configured to send the first TF.

12. A station (STA), comprising:
a transceiver module, configured to receive a first trigger frame (TF), wherein the first TF comprises at least one user information field, each of the at least one user information field is used to allocate an uplink (UL) distributed resource unit (dRU) to the STA.

13. An access point (AP), comprising:
one or more processors,
wherein the AP is configured to perform the method of any one of claims 1 to 5.

14. A station (STA), comprising:
one or more processors,
wherein the STA is configured to perform the method of any one of claims 6 to 10.

15. A non-transitory storage medium for storing instructions that, when executed on a communication device, cause the communication device to perform the method of any one of claims 1 to 5, or the method of any one of claims 6 to 10.
